# EUROPEAN PATENT APPLICATION

(11) **EP 1 810 824 A1**
(43) Date of publication of application: **25.07.2007**
(21) Application number: 05799013.7
(22) Date of filing: 25.10.2005
(51) Int. Cl.: B32B 27/40, B32B 27/30, B32B 27/00, B32B 5/18

(54) **PROCESS FOR PRODUCING POROUS COMPOSITE MATERIAL AND POROUS COMPOSITE MATERIAL**

(30) Priority: 25.10.2004 JP 2004309902
(71) Applicant: Sumitomo Electric Fine Polymer, Inc., Sennan-gun, Osaka 590-0458 (JP)
(72) Inventor: UNO, Atsushi, SUMITOMO ELECTRIC FINE POLYMER, INC., Sennan-gun Osaka 5900458 (JP); MORITA, Tooru, SUMITOMO ELECTRIC FINE POLYMER, INC, Sennan-gun Osaka 5900458 (JP); YAMAGUCHI, A., SUMITOMO ELECTRIC FINE POLYMER, INC, Sennan-gun Osaka, 5900458 (JP)
(74) Representative: Cross, Rupert Edward Blount
(86) International application number: PCT/JP2005/019551
(87) International publication number: WO 2006/046533

(57) **Abstract**

An elastic sheet including a polyurethane or polyurethane derivative and containing a substance having a reactive group is prepared. On the other hand, a flexible porous sheet is prepared which includes expanded PTFE and has a moisture vapor transmission rate (MVTR) of 3, 000 g/m²/24-hr or higher. A coating material containing a substance having a functional group chemically bonding to the reactive group contained in the elastic sheet is applied to that side of the porous sheet which is to be bonded, without completely filling the pores of the porous sheet therewith. The elastic sheet is superposed on the porous sheet through the coating material. The superposed sheets are pressed with heating to react the functional group with the reactive group and chemically bond them. Thus, the elastic sheet united with the porous sheet.

## Description

### TECHNICAL FIELD

The present invention relates to a process for producing porous composite material and a porous composite material, and more particularly to a porous composite material which is formed by superposing an elastic sheet of urethane and a PTFE porous sheet and excellent in moisture vapor transmission property, water-proof property and flexibility, and which is advantageously employed in clothing material such as a water-proof clothing or a sports clothing.

### BACKGROUND ART

A composite product of this type is conventionally provided by Japanese Patent NO. 2548771 (Patent Reference 1). In the Patent Reference 1, on a surface of a porous sheet of a thickness of 20 µm, formed by expanded PTFE of a continuous pore structure and constituting a substrate with a porosity of 40 % or higher, a liquid resin selected from polyurethane and polyurethane (meth)acrylate is coated to fill and impregnate the pore space with the resin, and the liquid resin highly filled in the pores is solidified, cured and dried to form a coating layer on the porous sheet that eventually becomes a substrate, thereby obtaining a final product having a moisture vapor transmission rate of at least 1200 g/m²/24Hr.

It is stated that the product of Patent Reference 1, as the pores of the porous sheet being securely impregnated with the liquid resin, becomes a product without pinholes and can provide a water-proof/gas- permeable product or a water-proof/gas-permeable clothing.

Patent Reference 1: Japanese Patent No. 2548771

### DISCLOSURE OF THE INVENTION

### PROBLEMS TO BE SOLVED BY THE INVENTION

In the aforementioned product, however, since the PTFE porous sheet is cured in a state where the continuous pores are securely impregnated with the urethane resin and completely filled, it becomes hard and lacks flexibility. Therefore, when it is employed as a material for clothing, it involves a drawback that most desirable "softness" and "touch" are deteriorated.
Also since the liquid resin is impregnated and cured in the pores of the porous sheet, the final product becomes low in the moisture permeability and causes a defect of sweatiness when used as a clothing material.

The present invention is made in consideration of these drawbacks, and an object thereof is to provide a composite material that secures flexibility suitable for a clothing material, that retains a moisture vapor permeability capable of moisture elimination in case of sweating, and that further has a water-proof property, an abrasion resistance, a flame retardant property and a light weight, thus being advantageously usable as water-proof clothing such as a rainwear, particularly as rainwear for sports such as golf or ski.

### MEANS FOR SOLVING THE PROBLEMS

In order to accomplish the aforementioned target, according to the first aspect of the present invention, there is provided a producing method for a porous composite material, including the steps of:
preparing an elastic sheet including polyurethane or a polyurethane derivative and containing a substance having a reactive group;
preparing a flexible porous sheet formed by expanded PTFE (polytetrafluoroethylene) and having a moisture vapor transmission rate (MVTR) of 3,000 g/m²/24hr or higher;
coating, on a side to be bonded of the porous sheet, a coating material containing a substance having a functional group capable of chemically bonding to the reactive group contained in the elastic sheet, without completely impregnating the pores of the porous sheet;
laminating the elastic sheet and the porous sheet across the coating material; and
heating and pressing the sheets in the laminated state to cause a reaction of the functional group and the reactive group to realize a chemical bonding and integrally uniting the elastic sheet with the porous sheet.

In the present invention, as described above, a porous sheet of expanded PTFE and an elastic sheet of urethane or an urethane derivative are formed completely independently and formed into a laminated structure, and, at the interface of the laminated porous sheet and elastic sheet, a functional group of a coating material on the side of the porous sheet and a reactive group impregnated in the elastic sheet are chemically bonded. It is thus prevented that the pores of the porous sheet are impregnated and completely filled with the polyurethane resin as in the case of Patent Reference 1. Thus the porous sheet can maintain its characteristic flexibility and becomes suitable as a composite material for clothing. Also as the pores are not completely filled by the resin, the moisture vapor transmission rate is increased, and becomes 3, 000 g/m²/24Hr or higher in the present invention as described above, that is twice or more of 1,200 g/m²/24Hr in the Patent Reference 1.

The substance having the reactive group, contained in the elastic sheet, is a substance remaining in the urethane constituting the elastic sheet and/or a substance impregnated therein.
The polyurethane derivative can be polyurethane (meth)acrylate.
The substance having the reactive group, contained in the elastic sheet of polyurethane or a polyurethane derivative, is preferably present in a proportion of from 5 to 15 parts by weight with respect to 100 wt% of the elastic sheet.
For impregnating the elastic sheet with the substance having a reactive group, employable for example is a method of mixing polyurethane, a solvent and a polymer having a reactive group and forming a film therefrom.

As the substance having the reactive group, a polyisocyanate or a silane type crosslinking agent having an isocyanate group is used, in which polyisocyanate can be employed advantageously because of an excellent affinity and a reactivity with polyurethane.
As polyisocyanate, employable is triphenylmethane-p,p', p"-triisocyanate, hexamethylene diisocyanate, diphenylmethane-4,4'-diisocyanate or toluenediisocyanate. Polyacrylate, epoxy, xylene or polyamide may be employed in combination with such polyisocyanate.
The substance having the reactive group, contained in the elastic sheet, is a substance remaining in urethane constituting the elastic sheet and/or a substance impregnated therein.

On the other hand, as the substance having the functional group, an ethylene-vinyl alcohol copolymer (EVOH) having a hydroxyl group or a compound having an active hydrogen such as a carboxylic acid or an amine is preferably used. The substance having the functional group is dissolved as a solution in water, an alcohol or another active hydrogen compound containing a solvent such as methylene chloride, methyl ethyl ketone, carbon tetrachloride, trichloroethylene or acetone to a required viscosity and coated on the porous sheet. The concentration of such solution is selected as from 0.05 to 5 w%.

The substance having the functional group and the substance having the reactive group are urethane bonded according to the following chemical formula.

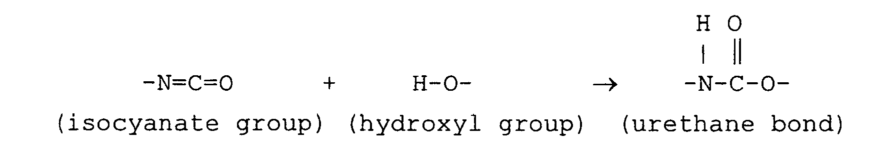

The coating material containing the substance having the functional group is a solution containing the compound having a hydroxyl group, a carboxylic acid or an amine in a solvent, and, after the coating material is coated on the porous sheet, the elastic sheet is laminated on the coated surface before drying, and is pressed under heating in a state where a part of the coating material is impregnated in the elastic sheet. Such permeation of a part of the coating material into the elastic sheet at the pressing under heating allows to increase the fixing power of the elastic sheet and the porous sheet by an anchoring effect.

For coating the coating material on a surface of the porous sheet, there may be employed a method of coating from a nozzle onto the surface of the porous sheet, a method of immersing the surface of the porous sheet in a bath of the solution, or a method of coating the solution with a roll coater or a doctor blade. In case of coating with these methods, the viscosity of the solution is so regulated that the interior of the pores exposed to the surface of the porous sheet is not filled.

The elastic sheet has a releasable paper adhered on the surface thereof, and it is preferable to peel off the releasable paper, then to superpose and laminate the fixing surface of the elastic sheet with the coated surface of the coating material of the porous sheet and to press under heating in such state.
It is however not essential to adhere the releasable paper onto the surface of the elastic sheet.
The pressing under heating is executed for example by utilizing a heated roller in the laminated state.
The temperature of heating is selected as from 100 to 250°C, and the pressing power is selected as 20 kgf or lower.
The aforementioned method allows to prevent that the polymer having the reactive group, impregnated in the elastic sheet, is cured by the moisture in the air, also to accelerate the reaction and to improve the adhesion strength.

Instead of the aforementioned method, it is also possible, after the coating material is coated on the porous sheet, the solvent is evaporated and the elastic sheet is laminated on a fixed surface of the coating material.
In this case, the dried coating material is fused at the pressing under heating and is made to partly permeate in the elastic sheet thereby generating an anchoring effect.

According to the second aspect of the present invention, there is provided a porous composite material including:
a flexible porous sheet formed by expanded PTFE and having a moisture vapor transmission rate of 3,000 g/m²/24Hr or higher;
an elastic sheet formed by polyurethane or a derivative thereof and having a moisture permeability, a flexibility and a water-proof property; and
a moisture permeable adhesion part having pores, disposed between the porous sheet and the elastic sheet for chemically bonding the interface of the porous sheet and the elastic sheet, wherein
pores of the porous sheet remain without being fully impregnated by the resin of the elastic sheet or the resin of the adhesion part; and
the elastic sheet and the porous sheet, in an integrated state across a coating material, have a moisture vapor transmission rate of from 3,000 to 100,000 g/m²/24Hr.

The porous composite material of the present invention is preferably produced by the producing method in the first aspect of the present invention, wherein the adhesion part is formed by the coating material.
In case of production by the aforementioned producing method, the adhesion part formed by a chemical bonding at the interface of the elastic sheet and the porous sheet can be made as an adhesion part which partially connecting the elastic sheet and the porous sheet and which has a moisture permeability capable of transmitting water vapor.
The composite material of the present invention is not necessarily restricted by the producing method described above, but may have a structure in which the pores of the porous sheet are not impregnated with the resin of the elastic sheet or the chemical bonding agent but remain in a state not completely filled, and in which bonding is made across a moisture permeable adhesion layer.

The porous sheet is for example formed by a flexible fibrous structured member, preferably having a moisture vapor transmission rate of 3, 000 g/m²/24Hr or higher, a porosity of from 30 to 90 %, and a thickness of from 5 to 100 µm. More preferably it has a moisture vapor transmission rate of 2, 500 g/m²/24Hr or higher, a porosity of from 65 to 85%, and a thickness of from 10 to 50 µm.

More specifically, the porous sheet is prepared by monoaxially or biaxially expanding a PTFE fibrous structured member with an expand rate of from 5 to 50 times, and the network of the fibrous structured member is widened by the expanding to form continuously and/or locally pores of from about 0.05 to 10 µm.
The PTFE constituting the raw material has_ a gas permeability, a water-repellent property, a flexibility, a flame retardant property and a high tensile strength, thus having physical properties suitable as the raw material for clothing.

The elastic sheet has a thickness of from 1 to 40 µm, preferably from 5 to 20 µm, and has a non-foamed structure or an independently foamed structure, thus providing a water-proof function.

The moisture permeable adhesion part preferably discontinuously connects the interface between the elastic sheet and the porous sheet.
The chemical bond, which is generated in the aforementioned producing method by a reaction of the substance having the reactive group, impregnated in the elastic sheet, and the substance having the functional group, coated on the porous sheet, does not occur in a completely continuous state but occurs partially, thus forming a bond along the external shapes in the interface of the elastic sheet and the porous sheet. Therefore, the adhesion part formed by such chemical bonding may be made as a moisture permeable part capable of transmitting the water vapor.

The porous composite material of the present invention, formed by a laminate member of the elastic sheet and the porous sheet, has a total thickness of from 10 to 100 µm, preferably from 10 to 60 µm.
Such porous composite material has a moisture permeability in addition to a flexibility, thus avoiding the sweatiness when employed in a clothing.

The porous composite material of the present invention, as described above, has a water-proof property while retaining a moisture permeability and is also flexible, thus being advantageously employable as a material for clothing.
Therefore the present invention, in a third aspect thereof, provides products including clothing such as a raincoat, and a rainwear for sporting such as golf or ski, utilizing the porous composite material.
It is also usable, in addition to the clothing, as the material of various products requiring water-proof property, moisture permeability and durability such as a tent, an automotive cover, female hygienic products, shoes, gloves, a sleeping bag or a mattress.
Also the porous composite material of the present invention is not limited to the products listed above, but, having also a flame retarding property, a heat resistance, an abrasion resistance and a strength, is applicable to various products requiring these properties.

### EFFECT OF THE INVENTION

In the present invention, as described above, in a porous composite material formed by integrating an elastic sheet, formed by polyurethane or a derivative thereof, and a porous sheet, formed by expanded PTFE, in a laminate state, the pores of the porous sheet are not fully impregnated with the resin of the elastic sheet or with the chemical bonding resin but are made to remain, and an adhesion part formed by the chemical bonding is given a moisture permeability capable of transmitting water vapor, thereby providing a composite material having a flexibility and an excellent moisture permeability.

Also the expanded PTFE employed as the porous sheet provides a flexibility as characteristics thereof, and also provides a water-repellent property, a tensile strength and a flame retardant property.
On the other hand, as the elastic sheet is formed by polyurethane or a derivative thereof, the processing is good, and a water-proof function can also be easily provided.
Particularly in case of containing a polyisocyanate for chemical bonding, it is effective in improving the adhesivity of PTFE coated with the substance having the functional group.

The porous composite material of the present invention of the above-described structure, having moisture permeability, flexibility and water-proof property, becomes a material suitable for water-proof clothings, and, particularly suitable for a clothing for sweating sports as it can prevent sweatiness because of the excellent moisture removing function.
Furthermore, because of use of PTFE as the porous sheet, it is effective also as the material for products requiring a high tensile strength, a flame retardant property, an abrasion resistance and the like, which are the characteristics of PTFE.

Furthermore, according to the producing method of the porous composite material of the present invention, since the elastic sheet and the expanded PTFE porous sheet to be laminated are prepared separately, each sheet can be formed stably with satisfactory precision. Also the porous sheet, after being coated with the coating material, can be laminated with the elastic sheet and fused under heating, and can be mass produced in advance. Also as the adhesion strength is increased chemically, the composite can be formed while maintaining the flexibility which is the feature of the PTFE porous material.

### BRIEF DESCRIPTION OF THE DRAWINGS

[Fig. 1] Fig. 1 is a cross-sectional view of a composite material of the present invention.
[Fig. 2] Figs. 2(A) to 2(D) are views illustrating a producing method of the composite material.

### DESCRIPTION OF THE REFERENCE NUMERALS AND SIGNS

- 1: composite material
- 2: porous sheet
- 3: elastic sheet
- 4: moisture permeable adhesion part

### BEST MODE FOR CARRYING OUT THE INVENTION

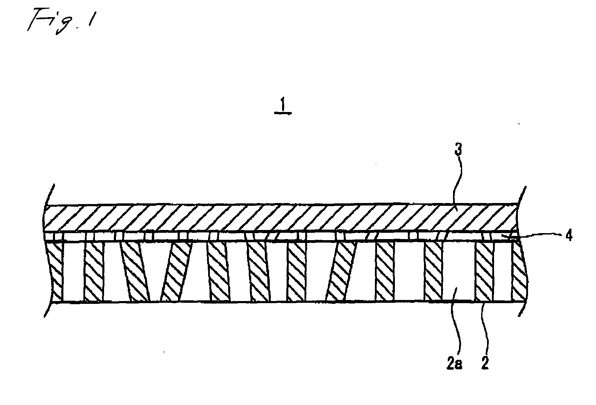

As illustrated in Fig. 1, a composite material 1 of the present invention is formed by a fabric-like continuous sheet formed by integrating an elastic sheet 2, formed by polyurethane or polyurethane (meth)acrylate, and a porous sheet 3 of expanded PTFE (polytetrafluoroethylene), across a moisture permeable adhesion part 4.
The moisture permeable adhesion part 4 is formed by a chemical bonding of polyisocyanate contained in the elastic sheet 3 and polyvinyl alcohol of a coating material coated on the porous sheet 2, and does not bond the interface of the elastic sheet 3 and the porous sheet 4 completely continuously, but achieves a partially discontinuous bonding, thereby providing a moisture removing function by transmitting water vapor.

In the porous sheet 2, a PTFE fibrous structured member is expanded to extend the network thereof for forming pores 2a, with a porosity within a range of from 30 to 90 %, selected as a porosity of 75 % in the present embodiment. Also the porous sheet 2 has a moisture vapor transmission rate of 3,000 g/m²/24Hr or higher, selected as 100,000 g/m²/24Hr in the present embodiment. It has a thickness within a range of from 5 to 100 µm, selected as 30 µm in the present embodiment.

The elastic sheet 3 has a non-foamed structure without pores, and has a thickness of from 1 to 40 µm, selected as 10 µm in the present embodiment.

The moisture permeable adhesion part 4 at the interface of the porous sheet 2 and the elastic sheet 3 is formed by a chemically bonded layer of a thermoplastic polymer having a functional group, containing a hydroxyl group, and a thermoplastic polymer having a reactive group, including an isocyanate group.
In the present embodiment, it is a chemically bonded layer of a polyisocyanate and an ethylene-vinyl alcohol copolymer.

The porous composite material 1 of the present invention, having a laminated structure of the porous sheet 2 and the elastic sheet 3 with a chemical bonding at the interface thereof, has a total thickness of from 10 to 100 µm, selected as 40 µm in the present embodiment.

The porous composite material of the above-described structure has:
a laminated structure of a porous sheet 2 formed by expanded PTFE of a high porosity, an elastic sheet 3 formed by polyurethane or a derivative thereof and having a moisture permeability, a flexible property and a water-proof property, and a moisture permeable adhesion part 4 having pores and being in advance fixed to the porous sheet 2 and fixed by chemical bonding to the elastic sheet 3;
wherein the pores 2a of the porous sheet 2 remain without being impregnated with the resin of the elastic sheet 3 or the resin of the adhesion part 4.
Therefore it maintains the flexibility without becoming rigid, and can exhibit "softness" and "touch" required in the use as a material for clothing. Besides it is provided with a moisture permeable property in addition to a water-proof property, thus not causing sweatiness when used in a clothing. It is therefore advantageous as a material for clothing for sweating sports, for example rainwear for golf and ski.

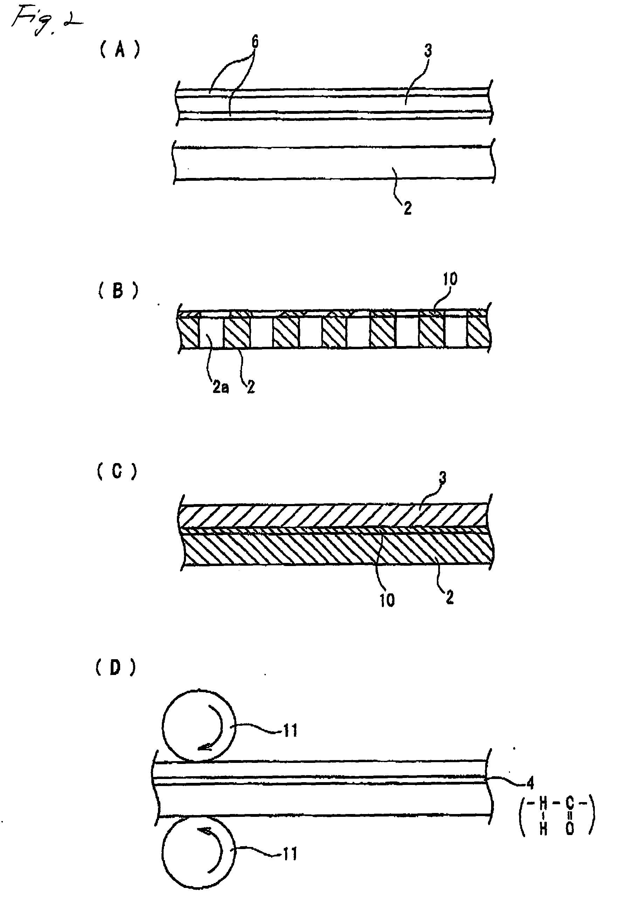

In the following, a producing method for the porous composite material 1 of the present invention will be described with reference to Fig. 2.
As illustrated in Fig. 2 (A), prepared is an elastic sheet 3 of polyurethane or a polyurethane derivative, impregnated with a polymer having a reactive group.
In the present embodiment, polyisocyanate is impregnated in the elastic sheet 3 of polyurethane. The polyisocyanate is impregnated in an amount of from 5 to 15 parts by weight with respect to 100 parts by weight of the elastic sheet 3, selected as 9 parts by weight in the present embodiment.
The elastic sheet 3 impregnated with the polyisocyanate is covered with a releasable paper 6, in order to prevent curing by the moisture in the air.

On the other hand, as the porous sheet 2, PTFE (polytetrafluoroethylene) having a fibrous structure is expanded to widen the network for forming pores, with a porosity within a range of from 30 to 90 %, selected as 75 % in the present embodiment.
The porous sheet 2 has a moisture vapor transmission rate of 3, 000 g/m²/24Hr or higher, selected as 100,000 g/m²/24Hr in the present embodiment.
Also the porous sheet 2 has a thickness within a range of from 5 to 100 µm.
In the present invention, the porous sheet 2 and the elastic sheet 3 to be laminated are prepared separately in advance.

As illustrated in Fig. 2 (B), on a surface of the porous sheet 2, a coating material 10, formed by a solution of EVOH having a functional group capable of a chemical bonding with the reactive group impregnated in the elastic sheet, is coated and is made to permeate into the porous sheet 2, thereby increasing a fixing power by an anchoring effect.
The coating material 10 has an EVOH concentration within a range of from 0.1 to 0.5 %, and is coated, under a viscosity regulation, in such a state not completely impregnating the interior of the pores 2a exposed on the coated surface.

Then, as illustrated in Fig. 2(C), the elastic sheet 3, after peeling off of the releasable paper 6, is superposed with the surface of the porous sheet 2, coated with the coating material 10, in a two-layered state.
In this state, a heating/pressing is executed by applying a predetermined pressure at a predetermined temperature.
The heating temperature is from 100 to 250°C, which is selected as 210°C in the present embodiment. The pressure is from 1 to 20 kgf, which is selected as 10 kgf in the present embodiment.
More specifically, as illustrated in Fig. 2 (D), employed are upper and lower rollers heated to the aforementioned temperature, and the laminated sheets are passed between the rollers to execute a pressing under the aforementioned pressure.

By the heating described above, the coating material coated on the porous sheet 2 is fused and the EVOH impregnated therein and polyisocyanate impregnated in the elastic sheet 3 form an urethane bond according to the following chemical formula, thereby forming the moisture permeable adhesion part 4.

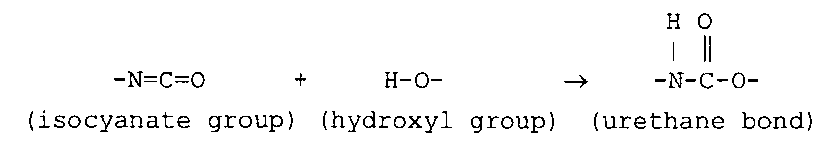

The moisture permeable adhesion part 4 is very thin, and is not formed microscopically in a completely continuous linear form at the interface between the porous sheet 2 and the elastic 3 but is formed discontinuously, thereby being capable of transmitting water vapor.

It is also possible, after coating the coating material 10 on the porous sheet 2, to evaporate the solvent of the coating material 10 to a dried state, then to laminate the elastic sheet 3 and to execute pressing under heating.

A final product obtained by the producing method above becomes the porous composite material 1 illustrated in Fig. 1.
Thus, in the porous composite material 1, the porous sheet 2 and the elastic sheet 3 are integrally bonded by the moisture permeable adhesion part 4 which is chemically bonded at the interface and provides a high bonding force. At the interface, the pores 2a of the porous sheet 2 remain without being fully impregnated with the polyurethane of the elastic sheet 3 or the coating material, whereby the porous composite material 1 maintains the characteristics of the porous sheet 2, thus having flexibility, and not deteriorating the moisture permeability.

Furthermore, the porous composite material 1 of the present invention is confirmed to have a water-proof property, an abrasion resistance and a flame retardant property by following measurements.
The water-proof property is measured by a method according to JIS L1092 B, and is evaluated as acceptable.
The abrasion resistance is measured by a washing test according to JIS L1096 F-3, and is also evaluated as acceptable.
The moisture permeability is measured by a method according to JIS 1099 B-1.

### INDUSTRIAL APPLICABILITY

The composite material of the present invention, being excellent in a moisture permeability, a water-proof property and a flexibility, is suitable as a material for a water-proof clothing without causing sweatiness, particularly as a material for a clothing for sweating sports. Also it has a high tensile strength, a water-repellent property and a flame retardant property, and is advantageously usable as a material for a water-proof cover such as an automotive cover, a tent, shoes, a sleeping bag or a mattress.

## Claims

1. A producing method for a porous composite material, comprising the steps of:
preparing an elastic sheet formed by polyurethane or a polyurethane derivative and containing a substance having a reactive group;
preparing a flexible porous sheet formed by expanded PTFE (polytetrafluoroethylene) and having a moisture vapor transmission rate (MVTR) of 3,000 g/m²/24Hr or higher;
coating, on a side to be bonded of the porous sheet, a coating material containing a substance having a functional group capable of chemically bonding to the reactive group contained in the elastic sheet, without completely impregnating the pores of the porous sheet;
laminating the elastic sheet and the porous sheet across the coating material; and
heating and pressing the sheets in the laminated state to cause a reaction of the functional group and the reactive group to realize a chemical bonding and integrally uniting the elastic sheet with the porous sheet.

2. The producing method for a porous composite material according to claim 1, wherein
a polyisocyanate or a silane type crosslinking agent having an isocyanate group is used as the substance having the reactive group;
an ethylene-vinyl alcohol copolymer (EVOH) having a hydroxyl group or a compound having an active hydrogen such as a carboxylic acid or an amine is used as the substance having the functional group; and
the reactive group and the functional group are reacted to form an urethane bond.

3. The producing method for a porous composite material according to claim 1 or 2, wherein
the substance having the reactive group, contained in the elastic sheet, is a substance remaining in urethane constituting the elastic sheet and/or a substance impregnated therein.

4. The producing method for a porous composite material according to any one of claims 1 to 3, wherein
the coating material containing the substance having the functional group is a solution containing the compound having a hydroxyl group, a carboxylic acid or an amine in a solvent, and
after the coating material is coated on the porous sheet, the elastic sheet is laminated on the coated surface before drying, and is pressed under heating in a state where a part of the coating material is impregnated in the elastic sheet.

5. The producing method for a porous composite material according to claim 2 or 3, wherein
the coating material containing the substance having the functional group is a solution of the compound having a hydroxyl group, a carboxylic acid or an amine in a solvent, and
after the coating material is coated on the porous sheet, the solvent is evaporated and the elastic sheet is laminated on a fixed surface of the coating material.

6. A porous composite material comprising:
a flexible porous sheet formed by expanded PTFE and having a moisture vapor transmission rate of 3,000 g/m²/24Hr or higher;
an elastic sheet formed by polyurethane or a derivative thereof and having a moisture permeability, a flexibility and a water-proof property; and
a moisture permeable adhesion part having pores, disposed between the porous sheet and the elastic sheet for chemically bonding the interface of the porous sheet and the elastic sheet, wherein
pores of the porous sheet remain without being fully impregnated by the resin of the elastic sheet or the resin of the adhesion part; and
the elastic sheet and the porous sheet, in an integrated state across a coating material, have a moisture vapor transmission rate of from 3,000 to 100,000 g/m²/24Hr.

7. The porous composite material according to claim 6, being produced by the producing method according to any one of claims 1 to 5, wherein
the adhesion part is formed by a coating material.

8. The porous composite material according to claim 6 or 7, wherein
the porous sheet is formed by a flexible fibrous structured member, having a moisture vapor transmission rate of 3,000 g/m²/24Hr or higher, a porosity of from 30 to 90 %, and a thickness of from 5 to 100 µm.

9. The composite material according to any one of claims 6 to 8, wherein
the elastic sheet has a water-proof property and a thickness of from 1 to 40 µm.

10. A product including a water-proof clothing and a sports clothing, prepared with the composite material according to claim 9.
